(19) Europäisches Patentamt
European Patent Office
Office européen des brevets

(11) **EP 1 467 194 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**03.11.2021   Patentblatt 2021/44**

(45) Hinweis auf die Patenterteilung:
**19.08.2015   Patentblatt 2015/34**

(21) Anmeldenummer: 03405248.0

(22) Anmeldetag: **11.04.2003**

(51) Int Cl.:
*G01N 15/00* *(2006.01)*      *G01N 1/24* *(2006.01)*
*G01N 1/38* *(2006.01)*        *G01N 15/06* *(2006.01)*
*G01N 15/14* *(2006.01)*       *G01N 1/22* *(2006.01)*

(54) **Verfahren und Vorrichtung zur Detektion, Charakterisierung und/oder Elimination von Schwebeteilchen**

Process and apparatus for detecting, characterising and/or eliminating particles

Procédé et dispositif pour la détection, caractérisation et/ou élimination de particules

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**13.10.2004   Patentblatt 2004/42**

(60) Teilanmeldung:
**10010663.2 / 2 270 465**

(73) Patentinhaber: **Testo SE & Co. KGaA**
**79853 Lenzkirch (DE)**

(72) Erfinder:
• **Burtscher, Heinz**
**8964 Rudolfstetten (CH)**
• **Kasper, Markus**
**8967 Widen (CH)**
• **Matter, Ulrich**
**5400 Baden (CH)**

(74) Vertreter: **Maucher Jenkins**
**Patent- und Rechtsanwälte**
**Urachstrasse 23**
**79102 Freiburg i. Br. (DE)**

(56) Entgegenhaltungen:
**EP-A- 1 251 344      WO-A-01/84116**
**US-B1- 6 439 027**

• **Matter U. et al: "Dynamic Filed Measurements of Submicron Particles from Diesel Engines", Environ. Sci. Technol., vol. 33, no. 11, June 1999 (1999-06), pages 1946-1952,**

**Beschreibung**

Die Erfindung betrifft das Gebiet der Detektion, Charakterisierung und/oder Elimination von Schwebeteilchen in einem Trägergas. Insbesondere betrifft sie ein Verfahren und eine Vorrichtung zum Charakterisieren, Trennen und/oder Eliminieren von Schwebeteilchen in einem Trägergas. WO 01/84116 offenbart ein Verfahren und Einrichtung zur extraktiven triboelektrischen Staub- und Aerosolmessung in strömenden Gasen.

Abgase aus Emissionsquellen in Haushalt, Privat- und Güterverkehr und Industrie enthalten Schwebeteilchen. Ein Stoffgemisch aus Schwebeteilchen und einem Trägergas wird oft als AEROSOL bezeichnet. Insbesondere submikroskopische Schwebeteilchen geben Anlass zu öffentlicher Besorgnis, da sie lungengängig sind und gesundheitliche Auswirkungen haben können.

Für die Charakterisierung von Emissionsquellen und Messungen von Schwebeteilchen in Abgasen muss in einem ersten Schritt eine unverfälschte Probe gewonnen werden, deren Schwebeteilchenkonzentration eine direkte Aussage über die Menge der von der Emissionsquelle emittierten schädlichen Schwebeteilchen erlaubt. Im Weiteren muss eine Messmethode zur Verfügung stehen, die eine möglichst aussagekräftige Charakterisierung der Schwebeteilchen unter Berücksichtigung von deren Schädlichkeit ermöglicht.

Für die Partikelmessung werden traditionell gravimetrische Methoden angewendet: Die Masse von bspw. in einem Filter abgeschiedenen Partikel wird gemessen und dient als Indikator für die Schädlichkeit des Abgases. Nachteilig ist, dass ausgerechnet die besonders gefährlichen weil lungengängigen kleinen und mittelgrossen Partikel im Vergleich zu den grossen Partikeln nicht ins Gewicht fallen.

Bei der Messung von Partikelemissionen von Motoren und Fahrzeugen gewinnt daher die Anzahl der emittierten Partikel als Kenngrösse an Bedeutung.

Es wäre wünschenswert, eine Messmethode und eine entsprechende Vorrichtung zur Verfügung zu haben, welche schädlichkeitsgerechtere Messresultate als gravimetrische Messungen liefern und bspw. die Partikelanzahl anstatt deren Gesamtmasse ermitteln. Solches wird auch bei der Erarbeitung von neueren Abgasnormen gefordert (bspw. bei der Projektskizze Particulate Measurement Program (PMP) der UNECE/GPPE). Ausserdem sollte eine Messvorrichtung möglichst kostengünstig und kompakt sein, damit sie in Messprüfständen von lokalen Strassenverkehrsämtern und Autogaragen etc. zur Anwendung kommen kann.

Den Weg hin zu einer Messmethode und Vorrichtung, die diesen Bedingungen gerecht werden, geht die Erfindung.

Messmethoden zum Ermitteln der Partikelzahl sind an sich bekannt. Es ergeben sich aber folgende Probleme:

1. Verdünnung: Es kann niemals der ganze Abgasstrom vermessen werden, sondern es muss eine Probe entnehmbar sein, deren Schwebeteilchenkonzentration Aussagen über die emittierte Gesamt-Schwebeteilchenmenge erlaubt. Gemäss dem Stand der Technik ist dem Messsystem häufig ein sog. Vollstromverdünner vorgeschaltet: sämtliches Abgas wird dem Messstrang zugeführt; zusätzlich wird so viel Verdünnungsgas beigegeben, dass der Volumenstrom im Messstrang unabhängig von der Abgasmenge konstant ist. Auf diese Weise wird erreicht, dass die Konzentration von Schwebeteilchen im Messstrang proportional zur emittierten Gesamtpartikelmenge ist. Für eine Messung muss lediglich eine beliebig grosse Teilmenge aus dem Gas im Messstrang abgezweigt und die darin enthaltene Partikelkonzentration ermittelt werden. Die auf Vollstromverdünnung basierenden Messsysteme sind aber sehr aufwändig, gross und teuer, da ein sehr grosses Gasvolumen bewältigt werden muss (der Volumenstrom im Messstrang muss ja grösser sein als der maximale Abgasstrom, bspw. bei Volllast des Motors).

2. Flüchtige Schwebeteilchen: Bei den Schwebeteilchen handelt es sich um ein Gemisch von flüchtigen und festen Substanzen. Eine solche Situation liegt beispielsweise bei Dieselabgas vor; dabei bestehen die festen Staubteilchen vorwiegend aus Kohlenstoff, die flüchtigen Teilchen aus kondensierten Kohlenwasserstoffen und/oder Schwefelsäure und Wasser. In vielen Fällen ist es wünschenswert, die flüchtigen von den festen Schwebeteilchen zu trennen oder die flüchtigen Schwebeteilchen zu eliminieren. Beispielsweise tragen, wenn es um Atemwegerkrankungen geht, vorwiegend die festen Schwebeteilchen zur Schädlichkeit des Abgases bei. Ausserdem sind bei der Schädlichkeit von flüchtigen Schwebeteilchen - das Ausmass der Schädlichkeit ist Gegenstand von laufenden Untersuchungen - andere Messkriterien massgebend; deren Anzahl ist in erster Näherung nicht relevant, wohl aber deren Gesamtmasse.

Zur Elimination der flüchtigen Schwebeteilchen aus dem Messgas gibt es gemäss dem Stand der Technik einige Ansätze:

Thermodesorber: Der Thermodesorber (oft auch als Thermodenuder bezeichnet) ist eine seit mehreren Jahren verwendete und von verschiedenen Anbietern (TSI/Topas; Dekati) kommerzialisierte Apparatur zur Entfernung flüchtiger Partikel aus einem Aerosol. Der Thermodesorber besteht aus einem beheizten Rohr, in dem das Aerosol auf eine definierte Temperatur gebracht und damit flüchtige Aerosolkomponenten verdampft werden können; daran schliesst sich eine sogenannte Aktivkohlefalle an, in der das Aerosol-Dampf-Gemisch durch ein Rohr mit Drahtgitterwandungen geführt wird, ausserhalb dessen sich Aktivkohle (-Granulat) befindet. Dampfmoleküle der flüchtigen Aerosolkomponenten dringen aufgrund ihrer starken Diffusionsbewegung bis zu den Aktivkohlekörnern vor, wo sie absorbiert und somit aus dem Aerosol entfernt werden. Die festen, nicht verdampften Aerosolpartikel folgen dem Gasstrom durch das Rohr mit den Gitterwandungen. Hinter der Aktivkohlefalle enthält das Aerosol aufgrund der Absorption durch die Aktivkohle nur noch so wenig Dämpfe, dass diese nicht oder in unerheblichem Masse auskondensieren. Die Entfernung flüchtiger Aerosolkomponenten hängt unter ungünstigen Umständen vom Sättigungsgrad der Aktivkohle ab.

Ejektor-Verdünner (Dekati): Die finnische Firma Dekati bietet sogenannte Ejektor-Verdünner an, bei denen das Roh-Aerosol durch eine Düse geführt und von einem schnellen Verdünnungsluftstrom mitgezogen wird. Nachteile des Ejektorverdünners sind der schmale Einstellbereich des Verdünnungsverhältnisses und dessen Abhängigkeit von den Druckverhältnissen.

3. Messschwierigkeiten bei kleinen Partikeln: Gängige Messmethoden haben ihre Grenzen beim Zählen von sehr kleinen Schwebeteilchen, die zahlenmässig besonders ins Gewicht fallen können.

Eine an sich gängige Methode zur Zählung von Schwebeteilchen beruht auf der Lichtstreuung dieser Partikel beim Durchgang durch einen Lichtstrahl. Die Partikel werden dazu mittels einer Düse durch den kontinuierlichen Lichtstrahl hindurchgeblasen. Durch entsprechende Dimensionierung von Düsendurchmesser, Partikelkonzentration und Lichtstrahldurchmesser kann sichergestellt werden, dass sich jeweils nur ein einzelnes Partikel im Lichtstrahl befindet. Beim Durchgang durch den Lichtstrahl streut ein Partikel das Licht in Raumrichtungen ausserhalb der Strahlrichtung. Photodioden, die in diesen Raumrichtungen angeordnet sind, detektieren daher einen Anstieg der Lichtintensität während des Durchgangs des Partikels. Die Anzahl der so gemessenen Streulichtpulse ist damit gleich der Anzahl der Partikel, die in die Zähloptik eingedüst wurden.

Die Intensität des gestreuten Lichtes ist stark von der Grösse der Partikel abhängig. Unterhalb einer Partikelgrösse von 200-300 nm ist eine Bestimmung des Streulichtsignals sehr aufwendig oder praktisch nicht mehr möglich. Daher kommt die Methode der Teilchenzählung über Lichtstreuung häufig in Kombination mit sogenannten Kondensationskernzählern (CNC) in Anwendung: Da sich Partikel im Submikronbereich wegen der geringen Intensität des von ihnen gestreuten Lichtes einer Zählung mit optischen Methoden entziehen, werden sie im Kondensationskernzähler durch Aufdampfen einer Flüssigkeit physikalisch "vergrössert" bis sie ein für eine Zählung ausreichendes Streulichtsignal liefern. Dazu wird das Submikron-Partikel-haltige Aerosol zunächst über den gesättigten Dampf der Flüssigkeit geleitet; anschliessend wird durch starke Abkühlung in einem Kondenser eine Übersättigung des Dampfes erzeugt, der daraufhin auf den verfügbaren Oberflächen kondensiert, u.a. auf den Partikeln. Der Durchmesser, den die auf den Partikeln kondensierenden Tröpfchen bis zum Ende des Kondensationsprozesses erreichen, ist weitgehend unabhängig von der ursprünglichen Grösse der Aerosolpartikel.

Häufig wird Butanol als aufgedampfte Flüssigkeit verwendet: Das partikelhaltige Gas strömt zunächst durch eine geheizte Strecke (35°C) über einem Butanolbad. Dabei wird das Gas mit Butanoldampf gesättigt. Anschliessend folgt ein gekühlter Teil (Kondensator, 10°C), wo der Dampf wegen der reduzierten Temperatur übersättigt wird und auf den Partikeln kondensiert. Die Partikel wachsen so zu Tropfen von typisch ungefähr 10 $\mu$m Durchmesser.

Allerdings funktioniert die Tröpfchenbildung erst oberhalb eines gewissen Mindestdurchmessers der eingeleiteten Aerosolpartikel. Die Übersättigung darf nur so gross sein, dass keine homogene Nukleation, das heisst Tropfenbildung ohne Kondensationskern, auftritt. Andererseits sollte die Übersättigung möglichst gross sein, damit auch sehr kleine Partikel wachsen können (Dampfdruckerhöhung bei kleinen Partikeln). Bei gegebener Übersättigung ist der minimale Durchmesser Dk durch die Kelvin-Gibbs-Gleichung bestimmt:

$$Dk = 4\ sigma\ M\ /\ (RT\ rho\ \ln(S))$$

(Dk: Kelvin-Durchmesser

sigma: Oberflächenspannung

M: molare Masse der Dampfmoleküle

rho: Dichte der Flüssigkeit

R: Gaskonstante

S: Übersättigung)

Die Gleichung gilt für Tropfen aus dem Material des Dampfes, also erst, wenn bereits mindestens eine Monolage Dampf auf dem Partikel adsorbiert ist. Die Bedingung, dass diese Monolage entsteht, ist von der Partikeloberfläche abhängig.

Für den Kondensationskernzähler (CNC) bedeutet dies:

1. Die Bedingungen zur Bildung der ersten Lage müssen erfüllt sein (abhängig von Partikelmaterial, Oberflächenstruktur).

2. Damit das Partikel weiterwachsen kann, muss die kritische Übersättigung erreicht sein beziehungsweise D > Dk.

Neben diesen Phänomenen können auch noch Diffusionsverluste im CNC die Messung von sehr kleinen Partikeln stören.

Typische untere Grenzen für die Partikelgrösse liegen bei 20 nm oder noch kleiner. Es gibt heute bereits Modelle, die bei 3 nm noch 50 % Effizienz aufweisen. Die Endgrösse der im CNC entstehenden Tropfen ist weitgehend unabhängig von der Partikelgrösse.

Bei der Messung von Partikeln aus Motor- und Fahrzeugemissionen kann es - bspw. wegen Kondensatbildung bei der Probenentnahme - vorkommen, dass ein nicht unerheblicher Anteil der Partikel sich in der Nähe dieser Durchmesser-bezogenen Empfindlichkeitsschwelle des Kondensationskernzählers befindet. Das Messergebnis hängt dann stark von der momentanen und normalerweise nicht stabilen Grössenverteilung der Partikel ab und ist somit nicht mehr verlässlich.

Der Erfindung stellen sich also folgende Aufgaben:

Eine erste Aufgabe der Erfindung ist, eine Vorrichtung zum Abtrennen von flüchtigen Schwebeteilchen zur Verfügung zu stellen, sodass für eine weitergehende Charakterisierung oder Verarbeitung des Aerosols nur noch die festen Staubteilchen verbleiben. Die Vorrichtung sollte die Nachteile von bestehenden Vorrichtungen vermeiden und insbesondere einfach in der Herstellung und Handhabung sein, zuverlässig arbeiten und eine möglichst weit gehende Eliminierung der flüchtigen Schwebeteilchen ermöglichen.

Eine zweite Aufgabe der Erfindung ist, ein Verfahren und eine Vorrichtung zur Verfügung zu stellen, welche die störenden Einflussfaktoren bei zeitkritischen Partikelmessung aus sich ändernden Volumenströmen minimieren und dabei von der nachteiligen Vollstromverdünnung wegkommen.

Eine weitere Aufgabe der Erfindung ist, ein Verfahren und eine Vorrichtung zur Verfügung zu stellen, welche das Feststellen von Zuständen erlaubt, in denen die Messung nicht mehr verlässlich ist und ggf. durch weitere Methoden ergänzt werden muss.

Das gemäss einem ersten Aspekt der Erfindung zur Verfügung gestellte Verfahren zum Abtrennen von flüchtigen Schwebeteilchen und die entsprechende Vorrichtung beruhen auf einer Heizstrecke und eine Verdünnungseinheit. Hierbei besitzt die Vorrichtung die Verdünnungseinheit und eine nachgeschaltete Heizstrecke.

In der Heizstrecke wird die Temperatur des Aerosols derart erhöht, dass seine flüchtigen Bestandteile in die Gasphase übergehen. Am Ende der Heizstrecke liegt somit ein verändertes Stoffgemisch vor, in dem nur noch die nicht verdampften Substanzen als Partikel vorliegen, die flüchtigen Substanzen aber als Dämpfe.

Im Verdünnungssystem wird durch Beimischung partikelfreien Trägergases zum Aerosol die Konzentration der Partikel und Tröpfchen herabgesetzt, während sich die stoffliche Zusammensetzung der Partikel oder der Anteil flüchtiger Tröpfchen zu festen Partikeln nicht verändern. Für das zur Verdünnung verwendete partikelfreie Trägergas kann angenommen werden, dass der darin enthaltene Anteil von Stoffen, die im Aerosol als Tröpfchen oder Dämpfe vorliegen, vernachlässigbar gering ist. Der Verdünnungsprozess führt daher zu einer Herabsetzung des Dampfdruckes von solchen Substanzen. Die gesamte Verdünnungseinheit und das zur Verdünnung verwendete partikelfreie Trägergas können beheizt werden.

Bei einer Anordnung mit vorgeschalteter Verdünnungseinheit wird zunächst die Konzentration sowohl fester Partikel als auch flüchtiger Tröpfchen in der Verdünnungseinheit vermindert. In der nachgeschalteten Heizstrecke werden die flüchtigen Substanzen dann in die Dampfphase überführt. Durch Einstellen einer hinreichenden Verdünnung kann die Konzentration der flüchtigen Tröpfchen so vermindert werden, dass nach Verdampfung in der Heizstrecke der Dampfdruck dieser Substanzen so niedrig ist, dass sie auch bei nachfolgender Abkühlung auf die ursprüngliche Temperatur des Aerosols nicht mehr auskondensieren. Das aus der Anordnung austretende Substanzgemisch enthält somit nur noch feste Partikel.

Gemäss einem zweiten Aspekt der Erfindung geht es um ein Verfahren und eine Vorrichtung, welche eine Verdünnung des zu charakterisierenden Aerosols und/oder die Bereitstellung eines Messgases ermöglichen, dessen Konzentration an Schwebeteilchen charakteristisch ist für die emittierte Gesamt-Schwebeteilchenmenge.

Wenn man vom erwähnt aufwändigen Prinzip der Vollstromverdünnung Abstand nehmen möchte, muss vom für die Messung entnommenen Probevolumen auf das gesamte von der Anlage emittierte Abgasvolumen hochgerechnet werden. Dies erfordert eine Messung der Volumenströme sowohl im Messstrang als auch im Hauptabgasstrang, sowie deren Berücksichtigung bei der Datenermittlung oder -auswertung.

Handelt es sich beim Abgasstrom um einen konstanten Volumenstrom, so kann sich die Datenauswertung auf die Multiplikation der Messdaten mit einem Proportionalitätsfaktor beschränken. In bestimmten Fällen ist jedoch der Abgasvolumenstrom starken zeitlichen Schwankungen unterworfen, etwa bei der Messung von Fahrzeugemissionen während eines Fahrzyklus auf dem Rollenprüfstand. Für eine korrekte Datenauswertung müssen dann zusätzliche zeitkritische Einflussgrössen berücksichtigt werden, etwa

- der Zeitversatz zwischen der Volumenstrommessung im Abgasstrang und dem Eintreffen der entsprechenden Partikelwolke im Messinstrument,

- die diffusionsbedingte Verschmierung der (Flanken der) Partikelwolke auf dem Transportweg zum Messinstrument,

- das Ansprechverhalten des im Instrument realisierten Messprinzips auf eine sich schnell ändernde Partikelkonzentration.

Diesen Anforderungen wird der zweite Aspekt der Erfindung gerecht:

Der Messwert der Volumenstrommessung im Rohgaskanal (dem Hauptstrang) wird verwendet, um das Verdünnungsverhältnis in einer Verdünnungseinheit zeitlich zu variieren. Durch die Verdünnungseinheit wird Rohgas aus dem Rohgaskanal dosiert in einen Messgaskanal transferiert, wobei der Transfer so geregelt wird, dass die pro Zeiteinheit transferierte Rohgasmenge abhängig vom Volumenstrom im Rohgaskanal und desto grösser ist, je grösser der Volumenstrom im Rohgaskanal ist

Demnach kann die Verdünnungseinheit so eingestellt werden, dass bei hohem Abgasvolumenstrom eine kleine Verdünnung erfolgt, bei niedrigem Abgasvolumenstrom hingegen eine hohe Verdünnung; sinkt der Abgasvolumenstrom auf Null, so wird das Verdünnungsverhältnis unendlich, d.h. den Messinstrumenten wird nur partikelfreies Verdünnungsgas zugeführt.

Eine Messung der Volumenströme von Abgas (Rohgaskanal=Hauptstrang) und Messgas (Messgaskanal=Nebenstrang) kann durch verschiedene bekannte Messprinzipien realisiert werden, so dass die Verfügbarkeit der daraus erhältlichen Messdaten vorausgesetzt werden kann.

Gemäss einer besonders bevorzugten Ausführungsform wird die Regelung so gewählt sein, dass der aus der Verdünnungseinheit austretende Partikelstrom in seinem zeitlichen Verlauf dem Partikelstrom im Abgasstrang genau proportional ist (eventuell bis auf einen geringfügigen, durch den räumlichen Abstand von Volumenstrommessung und Verdünnungseinheit bedingten Zeitversatz; dieser lässt sich bspw. elektronisch korrigieren). Damit ist sichergestellt, dass die der Verdünnungseinheit nachgeschalteten Messinstrumente einen zeitlichen Verlauf der Partikelkonzentration messen, der genau dem Partikelstrom durch den Abgashauptstrang entspricht.

Eine auf bereits realisierter Technologie beruhende Ausführungsform der Verdünnungseinheit ist ein sogenannter Rotationsverdünner (oder Karussellverdünner), bei dem eine mit Kavitäten versehene Scheibe kleine Rohgasvolumina in das partikelfreie Verdünnungsgas überführt (Ein solcher Rotationsverdünner - Typ MD19-2E - ist erhältlich bei der Patentanmelderin, der Matter Engineering AG; entsprechende Informationen findet man in Ch. Hueglin, L. Scherrer und H. Burtscher, J. Aersol Sci. 28, p.1049 (1997) oder direkt beim Hersteller). Je langsamer die Scheibe rotiert, desto weniger Rohgas gelangt in den Verdünnungsstrom, und desto höher ist das Verdünnungsverhältnis. Die Rotationsfrequenz wird aus einem benutzerseitigen Vorgabewert und bspw. dem Verdünnungsgasstrom ermittelt, sodass bei gleichem Vorgabewert und einem sich verändernden Messgasstrom - etwa durch das Zuschalten eines weiteren Messinstrumentes - das Verdünnungsverhältnis durch Anpassung der Rotationsfrequenz konstant bleibt.

Das oben beschriebene Steuerprinzip für die Rotationsfrequenz der Scheibe wird nun so erweitert, dass auch der im Abgasstrang gemessene Volumenstrom in die Berechnung der Rotationsfrequenz eingeht. Beispielsweise wird bei ruhendem Abgas (entsprechend "Motor aus") ein Volumenstrom von Null gemessen; der Voreinstellwert für die Rotationsfrequenz wird mit dem Volumenstromwert (in diesem Falle Null) multipliziert, sodass bei stehendem Abgas nun auch die Scheibe nicht rotiert.

Gemäss dem dritten Aspekt der Erfindung werden ein Verfahren und eine Vorrichtung zur Verfügung gestellt, welche ebenfalls einen Schritt auf dem Weg hin zu einer teilchenanzahlempfindlichen, vergleichsweise kompakten Charakterisierungsvorrichtung für Aerosole gehen. Es wird bei Kondensationskernzählern (CNC) angesetzt, bei welchen sich die vorstehend geschilderten Probleme mit Teilchen nahe an der oder unter der kritischen Grösse ergeben.

Unterschreiten die in den Kondensationskernzähler eingeleiteten Aerosolpartikel eine gewisse Mindestgrösse, so kann der Kondensationsprozess beim gegebenen Übersättigungsgrad des Dampfes nicht oder nur sehr langsam einsetzen. Die an solch kleinen Aerosolpartikeln kondensierten Tröpfchen haben folglich einen deutlich geringeren Durchmesser als die auf grösseren Ausgangspartikeln kondensierten.

Bei der üblichen Betriebsart von Kondensationskernzählern wird festgestellt. ob ein von der Zähloptik festgestellter Streulichtblitz eine gewisse Mindestintensität aufweist, um ihn als Signal eines Partikels bei der Auswertung zu berücksichtigen. Damit misst der CNC die Partikelkonzentration, liefert aber selbst keine Grösseninformation. Diese muss bei Bedarf durch Kombination mit einem Beweglichkeitanalysator oder einer Diffusionsbatterie erhalten werden.

Gemäss dem dritten Aspekt der Erfindung wird, über die einfache Diskriminierung hinausgehend, zudem die Intensität des Streulichtpulses so empfindlich erfasst, dass die Häufigkeitsverteilung der Intensitäten ermittelt werden kann.

Damit macht sich dieser Aspekt der Erfindung die Eigenschaft zunutze, dass in der Zähloptik kleine Tröpfchen Streusignale von erheblich verminderter Intensität erzeugen. Auftreten von Lichtpulsen niedriger Intensität deutet also auf das Vorkommen kleiner Partikel im Aerosol hin. "Klein" bedeutet hier "in der Nähe der Durchmesser-bezogenen Detektionsschwelle des Instrumentes".

Übersteigt die relative Häufigkeit "kleiner" Lichtpulse ein gewisses Mass, weist dies auf bedeutende Partikelzahlen im Bereich der Detektionsschwelle hin, so dass nicht mehr von einer verlässlichen Messung der Gesamtpartikelzahl ausgegangen werden kann.

Dieses Verfahren ist von anderen Parametern der Partikelmessung unabhängig und kann daher als zusätzliches Kriterium zur Validierung des Ergebnisses eingesetzt werden.

Im Folgenden werden Zeichnungen im Detail beschrieben. In den Zeichnungen zeigen:

- die Figur 1b ein Schema einer Ausführungsform des ersten Aspekts,

- die Figur 2 ein Schema einer Ausführungsform des zweiten Aspekts,

- die Figur 3 ein Schema einer Anordnung zum Bereitstellen von Messgas, welches frei von flüchtigen Schwebeteilchen ist und dessen Konzentration an festen Schwebeteilchen proportional zur Schwebeteilchenmenge in einem Rohgaskanal ist,

- die Figur 4 ein Schema einer Ausführungsform des dritten Aspektes,

- die Figuren 5a und 5b fiktive Häufigkeitsverteilungen von Streulichtpulsen in Funktion von deren Intensität.

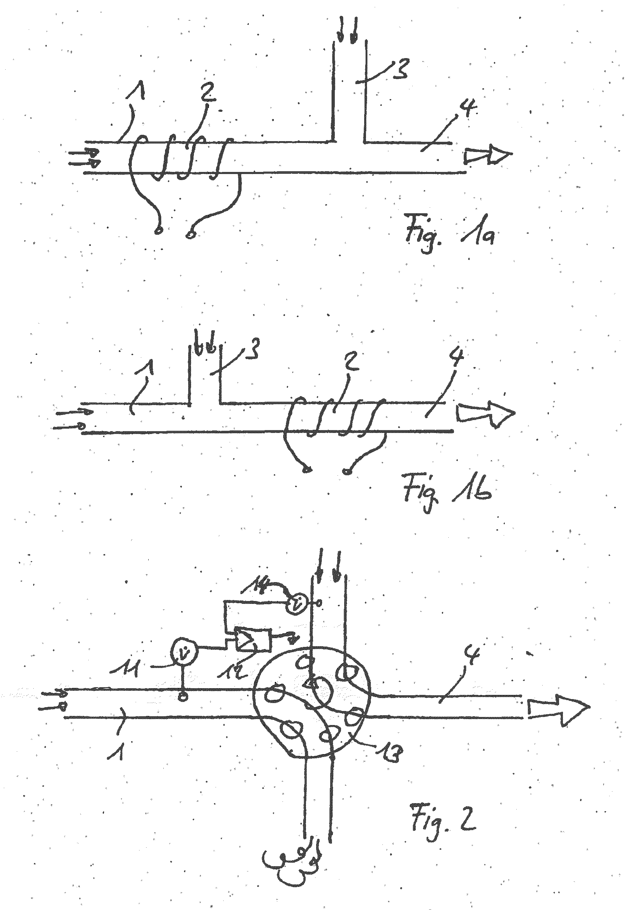

Bei der nicht zur Erfindung gehörenden Figur 1a wird das in den Rohgaskanal 1 einströmende, Schwebeteilchen enthaltende Gas auf einer Heizstrecke 2 so stark aufgeheizt, dass die flüchtigen Schwebeteilchen verdampfen. Bei Verbrennungsabgasen beträgt die dafür notwendige Temperatur üblicherweise mindestens ca. 180°C oder mindestens 200°C. Die maximale Temperatur ist abhängig von verwendeten Rohrmaterialien und beträgt bspw. ca. 400°C, da bei höheren Temperaturen katalytische Effekte auf Metalloberflächen eintreten und Messergebnisse verfälschen können. Bevorzugte Temperaturen sind bspw. ca. 190°C bis 350°C, besonders bevorzugt ist der Bereich zwischen 200°C und 300°C. Auf der Heizstrecke 2 vorhandene Heizungsmittel können eine Rohrheizung aufweisen, aber auch andere Heizungsmittel sind denkbar, bspw. im Gaskanal verlaufende Heizfäden.

Über einen Verdünnungsgaskanal 3 wird Verdünnungsgas zugeführt. Der Verdünnungsgaskanal mündet an einer Stelle in den Rohgaskanal, an welcher die in diesem befindlichen Verbrennungsabgase noch voll aufgeheizt sind, also sich bspw. immer noch im Temperaturbereich zwischen 180°C oder 200°C und 400°C befinden. Die Verdünnung bewirkt, dass die flüchtigen, verdampften Aerosole im Messgaskanal 4 nicht wieder auskondensieren.

Die Anordnung gemäss Figur 1b unterscheidet sich von derjenigen gemäss Figur 1a dadurch, dass der Verdünnungsgaskanal 3 in Strömungsrichtung vor der Heizstrecke 2 angeordnet ist.

Eine Ausführungsform des zweiten Aspektes ist in der Figur 2 gezeigt. Volumenstrommessungsmittel, bspw. eine erste Messsonde 11, ermitteln den im Rohgaskanal 1 vorhandenen Volumenstrom. Die Messresultate werden einem Regler 12 zugeführt. Dieser regelt eine Verdünnungseinheit, bspw. einen an sich bekannten Karussellverdünner 13. Die Verdünnungseinheit ist so angeordnet und ausgebildet, dass dem Messgaskanal 4 nur ein Teil des Rohgases (bspw. Abgases) zugeführt wird. Die Regelung erfolgt so, dass die Menge des dem Messgaskanal 4 pro Zeiteinheit zugeführten Rohgases desto grösser ist, je grösser der Volumenstrom im Rohgaskanal ist. Gemäss einer bevorzugten Ausführungsform ist die dem Messgaskanal 4 zugeführte Rohgasmenge proportional zum Volumenstrom. Der Volumenstrom des in den Messgaskanal 4 einströmende Verdünnungsgas kann durch geeignete Mittel (präzise Pumpen, Drosseln) konstant gehalten werden. Alternativ oder ergänzend dazu können auch im Messgaskanal Volumenstrommessungsmittel, bspw. eine zweite Messsonde 14 vorhanden sein, wobei dann die dem Messgaskanal zugeführte Rohgasmenge bspw. so geregelt wird, dass sie auch proportional zum Volumenstrom des Verdünnungsgases ist.

Die Messung von Volumenströmen kann in an sich bekannter Art erfolgen, bspw. mit einem Heissdraht-Flowmeter, durch Messung des Druckabfalls über einem Venturi-Rohr, mit einem Turbinen-Strömungsmesser etc. Es kann aber auch vorgesehen sein, dass bereits an sich bekannte Daten über den Volumenstrom des Rohgases aufbereitet werden. Bspw. lassen sich sehr präzise Daten über den Volumenstrom aus den in der Motorelektronik moderner Verbrennungsmotoren vorhandenen Daten ermitteln, zum Beispiel aus der Drehzahl und dem Ladedruck eines Turboladers.

In diesem letzteren Fall bestehen die Mittel zum Ermitteln des Volumenstromes im Rohgaskanal lediglich aus elektronischen Kommunikationsmitteln, welche mit der Motorelektronik in Verbindung stehen und diesem Volumenstromdaten entnehmen können.

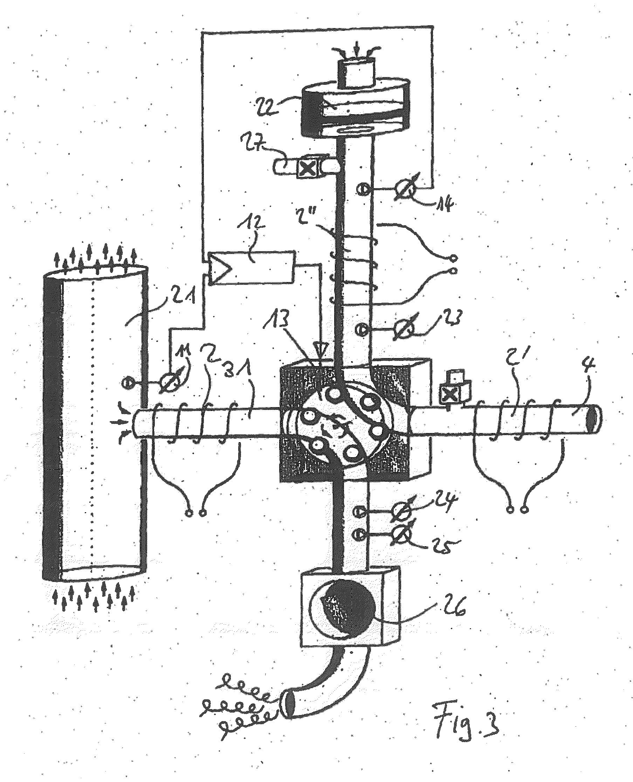

In der Figur 3 ist eine Anordnung gezeichnet, die zum Bereitstellen von Messgas dient, welches frei von flüchtigen Schwebeteilchen ist und dessen Konzentration an festen Schwebeteilchen proportional zur Schwebeteilchenmenge in einem Rohgaskanal ist. Die Anordnung kombiniert Prinzipien der beiden vorstehend aufgezeigten Aspekte der Erfindung.

Aus einem Rohgaskanal 21 wird über einen Sekundär-Rohgaskanal 31 mit Hilfe einer Pumpe 26 Rohgas abgezweigt. Auf einer ersten Heizstrecke 2 wird dieses aufgeheizt und anschliessend verdünnt. Die Verdünnung erfolgt hier über einen Karussellverdünner 13 in einen Messgaskanal, in welchen - in der Figur in den oberen Arm des Kanals - Verdünnungsgas einströmt. Ein Partikelfilter 22 kann vorgeschaltet sein, um sicherzustellen, dass das Verdünnungsgas schwebepartikelfrei ist. In der gezeichneten Anordnung ist dem Karusselverdünner 13 eine zweite Heizstrecke 2' nachgeschaltet. Die erste und die zweite Heizstrecke 2, 2' können bspw. so zusammenwirken, dass die gewünschte Temperatur für die Verflüchtigung (bspw. zwischen 180°C und 400°C) erst in bzw. nach der zweiten Heizstrecke 2' erreicht wird, die erste Heizstrecke also mithin als Vorheizstufe dient, um bspw. zu verhindern, dass die Temperatur des Rohgases beim Eintritt in den Sekundär-Rohgaskanal 31 unter den Taupunkt fällt, wodurch neue, im Rohgaskanal 21 noch nicht vorhandene flüchtige Partikel entstehen würden. Eine Verdünnungsgas-Vorheizstrecke 2" kann bspw. dazu dienen, das Verdünnungsgas auf etwa dieselbe Temperatur wie das Rohgas vorzuheizen. Die Temperatur des Rohgases und des Verdünnungsgases vor der zweiten Heizstrecke 2' beträgt bspw. zwischen 70°C und 160°C.

Im Rohgaskanal 21 ist eine erste Messsonde 11 zum Ermitteln des Volumenstromes vorhanden. Der Regler 12 regelt die Zuführung von Rohgas in den Messgaskanal 4 bspw. so, dass die dem Messgaskanal 4 pro Zeiteinheit zugeführte Menge Rohgas proportional zum Volumenstrom im Rohgaskanal 21 und je nach dem auch zum Verdünnungsgas-Volumenstrom im Messgaskanal ist; letzterer wird durch eine zweite Messsonde 14 ermittelt. Weitere Messsonden 23, 24, 25 dienen der Temperatur- und Druckermittlung der Gase im Mess- und im Sekundär-Rohgaskanal; die mit diesen Sonden ermittelten Werte können ebenfalls in die durch den Regler 12 bewirkte Regelung eingehen (nicht gezeichnet).

Im gezeichneten Beispiel ist die erste Messsonde 11 in Strömungsrichtung nach der Abzweigung des Sekundär-Rohgaskanales 31 im Rohgaskanal 21 angebracht. Die in den Sekundär-Rohgaskanal abgezweigte Menge Rohgas ist in vielen Fällen unerheblich und kann vernachlässigt werden. Es kann aber auch eine entsprechende Korrektur vorgenommen werden, bspw. wird die Pumpe 26 oft ein genau bekanntes Volumen pro Zeiteinheit fördern; auch Druck- und Temperaturmessungen mit Messsonden 24, 25 können hierzu Informationen liefern. Alternativ dazu kann die erste Messsonde 11 vor der Abzweigung des Sekundär-Rohgaskanales angebracht sein.

In der Zeichnung ist noch ein Stutzen 27 zum Einführen eines Eichaerosols dargestellt. Damit können im Messgaskanal 4 vorhandene oder diesem nachgeschaltete Messsysteme kalibriert werden.

Als Verdünnungsgas kann - wie in allen anderen Ausführungsformen - irgend ein Gas benutzt werden. Vorzugsweise sollte es im Wesentlichen keine Schwebeteilchen aufweisen, d.h. die Schwebeteilchenkonzentration sollte viel niedriger sein als die des Rohgases. Häufig wird es zweckmässig sein, gefilterte Luft als Verdünnungsgas zu verwenden.

Anschliessend an den Messgaskanal können Messeinheiten zur Charakterisierung des im Messgaskanal vorhandenen Aerosols anschliessen. Diese können auf verschiedenen physikalischen Prinzipien beruhen und physikalische und chemische Eigenschaften der Schwebeteilchen charakterisieren. Beispielsweise können Lichtstreuung an den Teilchen, die auf die Teilchen diffundierte elektrische Ladung, die photoelektrische Ausbeute, die Beweglichkeit etc. oder auch die Teilchenmasse analysiert werden. Es können mehrere verschiedene Messeinheiten parallel geschaltet oder unter Umständen auch in Serie hintereinander angeordnet werden; eine Kombination von verschiedenen physikalischen Prinzipien erhöht die Aussagekraft der Messungen. Ein besonders bevorzugtes Beispiel für eine Messeinheit, welche anschliessend an den Messgaskanal angeordnet werden kann, ist ein weiter unten noch beschriebener Kondensationskernzähler gemäss dem dritten Aspekt der Erfindung:

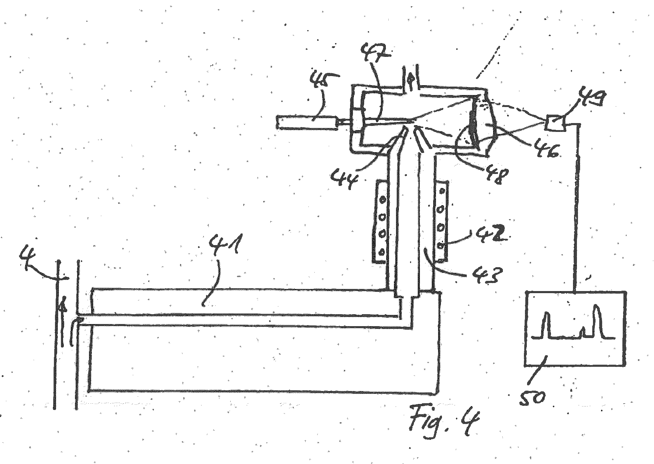

Im folgenden wird eine Ausführungsform des dritten Aspekts der Erfindung beschrieben. In der Figur 4 ist dazu schematisch ein Kondensationskernzähler zum Zählen von Schwebeteilchen abgebildet. Kondensationskernzähler sind an sich bekannt; daher sollen die apparativen Details und die Funktionsweise des Kondensationskernzählers hier nur summarisch beschrieben werden. Es versteht sich, dass der dritte Aspekt der Erfindung mit jedem bekannten oder neuen Kondensationskernzähler-Aufbau kombiniert werden kann. Eine bestimmte, im allgemeinen kleine (bspw. ungefähr 1 1/min) Menge Messgas wird aus dem Messgaskanal 4 abgezweigt (dafür vorhandene eventuelle Pumpen, Drosseln, Regelungsmittel etc. sind hier nicht dargestellt.) Das Messgas wird durch einen geheizten Sättiger 41 (Temperatur bspw. ungefähr 35°C) gelenkt; in diesem kommt es bspw. in Kontakt mit einem Butanolgetränkten Schwamm (natürlich sind anstelle von Butanol auch andere flüchtige Substanzen denkbar). Anschliessend wird es durch einen mit Kühlmitteln 42 versehenen Kondenser 43 (Temperatur: beispielsweise ca. 10°C) geleitet, wo das bei den dort herrschenden Temperaturen in Übersättigung vorhandene Butanol an der Oberfläche der Schwebeteilchen auskondensiert. Aufgrund der eingangs geschilderten Beschränkungen ist das aber nur für Schwebeteilchen mit einem gewissen Minimalradius in ausreichendem Masse der Fall. Anschliessend an den Kondenser 43 gelangt das Messgas durch eine Austrittsdüse 44 in eine Messkammer, in welcher ein von einer Lichtquelle 45 -typischerweise einer Laserdiode - erzeugter Lichtstrahl 47 auf ein unmittelbar hinter der Austrittsöffnung der Austrittsdüse 44 liegendes Messvolumen fokussiert wird. An Butanoltröpfchen (mit einem Schwebeteilchen als Kondensationskern) gestreutes Licht gelangt via Fokussiermittel 46 auf einen Photodetektor 49; ungestreutes Licht wird durch eine Blende 48 absorbiert. Vom Photodetektor erzeugte Lichtpulse gelangen in eine Auswerteeinheit 50.

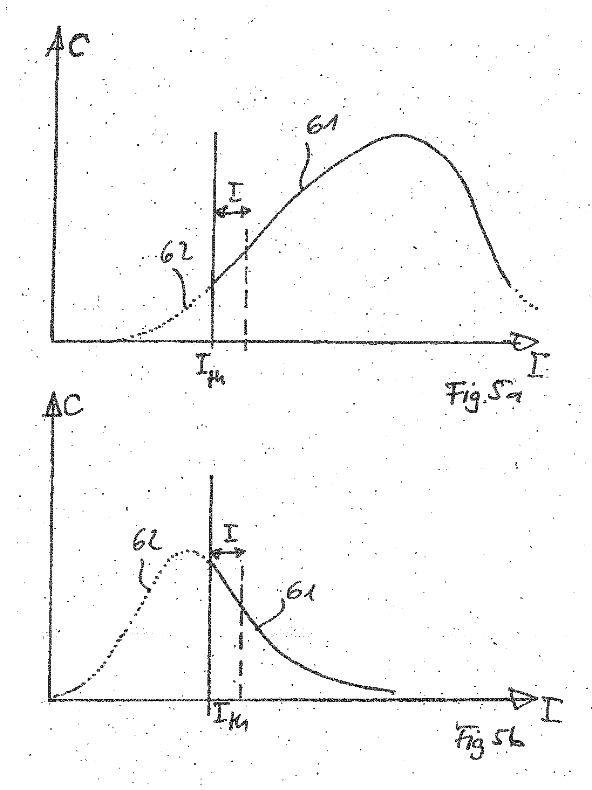

Gemäss der Erfindung erfolgt in der Auswerteeinheit 50 - sie kann Mittel zur analog- und/oder digital-elektronischen Verstärkung, Aufbereitung und/oder Wandlung von Signalen sowie elektronische Datenverarbeitungsmittel umfassen - eine Auswertung nach Streulichtintensitäten. Es wurde nämlich festgestellt, dass eine solche Auswertung Hinweise auf die Verlässlichkeit der Messung bringt. Zur Illustration sind in den Figuren 5a und 5b zwei Diagramme dargestellt, die für verschiedene Situationen die Häufigkeit (C) der während einer gewissen Messdauer ermittelten Messpulse in Funktion der Pulsstärke (I) darstellen (Die Diagramme sind also eigentlich Histogramme). Die Pulsstärke (1) ist abhängig von der Teilchengrösse. Sehr kleine Pulsstärken entsprechen Teilchen, auf deren Oberfläche sich nicht genug Kondensat anlagern konnte.

In beiden Diagrammen stellt $I_{th}$ die Schwellenintensität dar, unter welcher keine oder keine verlässlichen Messresultate mehr ermittelt werden können. Mit 61 ist die gemessene Kurve bezeichnet, mit 62 die Häufigkeitsverteilung im nicht mehr messbaren Bereich unter der Schwellenintensität, die in der Praxis also nicht zugänglich ist. Pulse, deren Intensität unter der Schwellenintensität liegt, werden bei einer Zählung nicht erfasst.

Die Figur 5a stellt den Normalfall dar. Aus dem Verlauf der gemessenen Häufigkeitsverteilung 61 kann mit recht grosser Zuverlässigkeit geschlossen werden, dass die Häufigkeit der nicht messbaren Pulse (dargestellt durch die gepunktete Linie 62) klein ist. In einem Fall wie in Fig. 5b, wo die gemessene Häufigkeitsverteilung 61 von grossen Intensitäten herkommend gegen $I_{th}$ hin nicht wesentlich abfällt oder gar ansteigt ist das nicht der Fall. Hier muss mit einer grossen Häufigkeit im nicht messbaren Bereich gerechnet werden. Dementsprechend kann ein Messresultat, welches nur die im messbaren Bereich liegenden Pulse (wie in Fig. 5b) zählt, nicht verwendet werden. Es ist zu verwerfen.

Feste Schwebeteilchen in Abgasen von Verbrennungsmotoren sind eigentlich immer relativ 'gross', d.h. deren Grösse ist kaum je unter der Detektionsschwelle von modernen Kondensationskernzählern. Der Grund dafür ist, dass im Brennraum eine sehr hohe Konzentration von festen Schwebeteilchen herrscht, wodurch zwingend eine Koagulation zu grösseren Konglomeraten stattfindet. (Anders liegt der Fall bspw. bei Gasturbinen). Aus diesem Grund hat eine hohe Konzentration an 'kleinen' Schwebeteilchen häufig eine der zwei folgenden Bedeutungen:

> a. Es sind noch flüchtige Schwebeteilchen vorhanden. Wenn der hier diskutierte dritte Aspekt der Erfindung mit dem ersten Aspekt der Erfindung kombiniert wurde, heisst das im Allgemeinen, dass eine Fehlfunktion vorliegt, bspw. dass die Heizstrecke nicht genügend beheizt ist.
> b. Es sind 'ungewöhnliche' feste Schwebeteilchen vorhanden, die mit anderen Messmethoden weiter untersucht werden müssen. Solche können bspw. durch Additive im Treibstoff bewirkt werden, bspw. die manchmal verwendeten Cer-Additive.

Die Unterscheidung, ob ein Messresultat brauchbar ist oder verworfen werden muss kann anhand der Häufigkeitsverteilung (in Funktion der Pulsstärke) auf verschiedene Arten gemacht werden. Beispielsweise kann die Häufigkeit von Pulsen, die in einem bestimmten, über dem Schwellenwert liegenden Intensitätsintervall I gemessen werden ermittelt und in Relation zur gemessenen Gesamtintensität gesetzt werden. Wenn der im Intensitätsintervall I gemessene Anteil von Pulsen einen gewissen, einstellbaren Prozentsatz überschreitet, wird die Messung verworfen. Alternativ dazu kann auch die Steigung der C(I)-Kurve in der Nähe von $I_{th}$ bestimmt werden und die Messung bspw. verworfen werden, wenn sie negativ ist, oder es kann das Maximum der C(I)-Kurve mit dem Wert bei $I_{th}$ verglichen werden etc.

Die Vorrichtung gemäss diesem dritten Aspekt enthält demnach Mittel zur elektronischen Analyse der Häufigkeitsverteilung, so, dass aufgrund der Häufigkeitsverteilung Rückschlüsse auf die Häufigkeit von Teilchen unter der einer gewissen Schwellengrösse gemacht werden können.

Zusammenfassend werden gemäss einem ersten Aspekt der Erfindung flüchtige Schwebeteilchen eliminiert, indem in einem ersten Schritt das Aerosol auf eine Temperatur aufgeheizt wird, bei welcher die flüchtigen Schwebeteilchen verdampfen und in einem zweiten Schritt das Aerosol mit einem Verdünnungsgas verdünnt wird. Die Reihenfolge des ersten und des zweiten Schrittes kann vertauscht werden. Gemäss einem zweiten Aspekt findet eine Verdünnung des Rohgases so statt, dass Rohgas einem mit Messgas durchflossenen Messgaskanal zugeführt wird, wobei die pro Zeiteinheit transferierte Menge Rohgas abhängig ist vom Volumenstrom im Rohgaskanal. Gemäss einem dritten Aspekt der Erfindung wird in einem Kondensationskernzähler nicht nur die Anzahl gemessener Streulichtpulse sondern auch deren Intensität ausgewertet, um Aussagen über die Verlässlichkeit der Messung machen zu können.

**Patentansprüche**

1. Verfahren zum Charakterisieren eines Aerosols, wobei das zu charakterisierende Aerosol flüchtige Schwebeteilchen enthält, und wobei zunächst eine unverfälschte, eine direkte Aussage über die Menge emittierter schädliche Schwebeteilchen erlaubende Probe mit den folgenden Verfahrens-Teil schritten gewonnen wird:

   • Verdünnen des zu charakterisierenden Aerosols mit einem Verdünnungsgas in einer Verdünnungseinheit,
   • Aufheizen des zu charakterisierenden Aerosols auf eine Temperatur von mindestens 180° C und vorzugsweise zwischen 200° C und 400° C, bei welcher die flüchtigen Schwebeteilchen verdampfen, auf einer Heizstrecke,

      wobei anschliessend eine Messung von gegebenenfalls im vorgängig aufgeheizten und verdünnten Aerosol vorhandenen festen Schwebeteilchen vorgenommen wird,
      wobei die Heizstrecke der Verdünnungseinheit nachgeschaltet ist, und wobei in einem Rohgaskanal (1) mit zu charakterisierendem Aerosol ein zeitlich nicht konstanter Volumenstrom vorhanden ist und wobei ein Messgaskanal (4) zum Zuführen von Messgas zu mindestens einer Messeinheit vorhanden ist, aufweisend die folgenden Verfahrensschritte:

      • Durchfliessen des Messgaskanals (4) mit einem Verdünnungsgas,
      • Ermitteln des Volumenstroms im Rohgaskanal (1, 21),wobei das Verdünnen des zu charakterisierenden Aerosols durch einen Transfer von Rohgas aus dem Rohgaskanal (1, 21) in den vom Verdünnungsgas durchflossenen Messgaskanal bewirkt wird, wobei der Transfer so geregelt wird, dass die pro Zeiteinheit transferierte Rohgasmenge abhängig vom Volumenstrom im Rohgaskanal (1, 21) und desto grösser ist, je grösser der Volumenstrom im Rohgaskanal ist und dass und mindestens ein Teil des aufgeheizten und verdünnten Aerosols mit dem Dampf einer flüchtigen Substanz in Übersättigung versehen wird, wodurch die flüchtige Substanz an der Oberfläche von Schwebeteilchen auskondensiert und dadurch Tröpfchen entstehen, dass anschliessend die Tröpfchen durch einen Lichtstrahl gelenkt werden und dadurch einen Streulichtpuls verursachen, welcher zum Zählen der Tröpfchen detektiert wird, und dass eine Streulichtpulsintensität detektiert und ausgewertet wird und dass der Anteil von Streulichtpulsen mit niedrigen Intensitäten nahe einer Streulichtpuls-Detektionsschwelle an der Menge aller detektierten Streulichtpulse ermittelt wird.

2. Verfahren nach Anspruch 1, **dadurch gekennzeichnet, dass** die pro Zeiteinheit transferierte Rohgasmenge bis auf einen möglichen Zeitversatz proportional zum Volumenstrom im Rohgaskanal (1, 21) ist.

3. Vorrichtung zur Durchführung des Verfahrens nach einem der vorangehenden Ansprüche, aufweisend eine Gaszuführung, eine Gasableitung, eine Messeinheit sowie eine Anordnung zum Eliminieren von flüchtigen Schwebeteilchen, aufweisend Beheizungsmittel zum Beheizen des Aerosols auf eine Temperatur, bei welcher flüchtige Schwebeteilchen verdampfen, und eine Verdünnungseinheit (13) zum Verdünnen des Aerosols mit einem Verdünnungsgas, wobei die Messeinheit den Beheizungsmitteln und der Verdünnungseinheit nachgeschaltet und zum Messen von im vorgängig aufgeheizten und verdünnten Aerosol vorhandenen festen Schwebeteilchen ausgebildet ist, wobei die Verdünnungseinheit den Beheizungsmitteln vorgeschaltet ist und die die Beheizungsmittel so ausgebildet sind, dass sie in einem Normalbetrieb das Aerosol auf eine Temperatur von mindestens 180°C und vorzugsweise zwischen 200°C und 400°C aufheizen, **gekennzeichnet durch** einen Rohgaskanal mit einem Aerosol-Einlass, und einen Messgaskanal mit einem Verdünnungsgaseinlass sowie mit die Verdünnungseinheit bildenden Transfermitteln (13) zum dosierten Transfer von Aerosol aus dem Rohgaskanal in den Messgaskanal, und eine Messeinheit zur Messung von Schwebeteilchen im verdünnten Aerosol im Messgaskanal, sowie Mittel zum Bestimmen des Aerosol-Durchflusses im Rohgaskanal und einen Regler (12) zum Regeln des Transfers von Rohgas in den Messgaskanal, wobei der Regler so ausgebildet ist und so mit den Transfermitteln in Wirkverbindung steht, dass die Transfermittel desto mehr Rohgas transferieren, je höher der Rohgas-Volumenstrom im Rohgaskanal ist und einen Sättiger (41) in welchem das Aerosol mit einer flüchtigen Substanz versehen werden kann und einen Kondenser (43) in welchem Bedingungen vorherrschen, durch welche die flüchtige Substanz in Übersättigung bringbar ist, ein Messvolumen, in welchem Schwebeteilchen aus dem Kondenser durch einen Lichtstrahl lenkbar sind, und Detektionsmittel zum Detektieren von Streulichtpulsen, welche durch das Streuen von Licht des Lichtstrahles an Schwebeteilchen verursacht wird, sowie Auswertemittel, die zur Auswertung von Streulichtimpulsintensitäten ausgebildet sind.

**Claims**

1. Method for characterizing an aerosol, wherein the aerosol to be characterized contains volatile suspended particles, and wherein initially an unadulterated sample which permits a direct statement relating to the quantity of emitted harmful suspended particles is obtained with the following partial method steps:

   • diluting the aerosol to be characterized with a dilution gas in a dilution unit,
   • heating the aerosol to be characterized to a temperature of at least 180°C and preferably between 200°C and 400°C at which the volatile suspended particles evaporate, on a heating section,

   wherein solid suspended particles possibly present in the previously heated and diluted aerosol are subsequently measured,

   wherein the heating section is connected downstream of the dilution unit, and wherein in a raw gas channel (1) with aerosol to be characterized there is a volume flow which is not constant over time, and wherein a measurement gas channel (4) for supplying measurement gas to at least one measurement unit is present, comprising the following method steps:

   • conducting a dilution gas through the measurement gas channel (4),
   • determining the volume flow in the raw gas channel (1, 21), wherein the dilution of the aerosol to be characterized is effected by a transfer of raw gas from the raw gas channel (1, 21) into the measurement gas channel, through which the dilution gas flows, wherein the transfer is controlled in such a manner that the raw gas quantity transferred per unit of time is dependent upon the volume flow in the raw gas channel (1, 21) and is all the larger, the larger the volume flow in the raw gas channel and in that at least a portion of the heated and diluted aerosol is provided with the vapour of a volatile substance in supersaturation, whereby the volatile substance condenses on the surface of suspended particles and consequently droplets are produced, in that the droplets are then directed through a light beam and thereby cause a scattered light pulse which is detected for counting the droplets, and in that a scattered light pulse intensity is detected and evaluated and in that the proportion of scattered light pulses having low intensities close to a scattered light pulse detection threshold is determined in relation to the quantity of all detected scattered light pulses.

2. Method according to Claim 1, **characterized in that**, with the exception of a possible time offset, the raw gas quantity transferred per unit of time is proportional to the volume flow in the raw gas channel (1, 21).

3. Device for carrying out the method according to one of the preceding claims, comprising a gas feed, a gas discharge, a measurement unit and an arrangement for eliminating volatile suspended particles, comprising heating means for heating the aerosol to a temperature at which volatile suspended particles evaporate and a dilution unit (13) for diluting the aerosol with a dilution gas, wherein the measurement unit is connected downstream of the heating means and the dilution unit and is designed for measuring solid suspended particles present in the previously heated and diluted aerosol, wherein the dilution unit is connected upstream of the heating means and the heating means are designed in such a manner that during normal operation they heat the aerosol to a temperature of at least 180°C and preferably between 200°C and 400°C, **characterized by** a raw gas channel having an aerosol inlet, and a measurement gas channel having a dilution gas inlet and having transfer means (13), which form the dilution unit, for the metered transfer of aerosol from the raw gas channel into the measurement gas channel, and a measurement unit for measuring suspended particles in the diluted aerosol in the measurement gas channel, and means for determining the aerosol through-flow in the raw gas channel and a regulator (12) for regulating the transfer of raw gas into the measurement gas channel, wherein the regulator is designed and operatively connected to the transfer means such that the transfer means transfer all the more raw gas, the higher the raw gas volume flow in the raw gas channel, and a saturator (41), in which the aerosol can be provided with a volatile substance, and a condenser (43), in which conditions prevail which can bring the volatile substance to supersaturation, a measurement volume, in which suspended particles can be directed from the condenser through a light beam, and detection means for detecting scattered light pulses caused by scattering of light of the light beam on suspended particles, and evaluating means designed for evaluating scattered light pulse intensities.

**Revendications**

1. Procédé de caractérisation d'un aérosol, l'aérosol à caractériser renfermant des particules volatiles en suspension, un échantillon inaltéré autorisant un pronostic direct relatif à la quantité des particules nocives en suspension étant recueilli, par les étapes opératoires partielles mentionnées ci-après :

- dilution dudit aérosol à caractériser, à l'aide d'un gaz de dilution, dans une unité de dilution,
- chauffage de l'aérosol à caractériser, à une température d'au moins 180 °C et comprise, de préférence, entre 200 °C et 400 °C, la section de chauffage étant implantée en aval de l'unité de dilution,
une mesure de particules solides en suspension, éventuellement présentes dans l'aérosol chauffé et dilué au préalable, étant effectuée au stade consécutif,
un flux volumique, non constant dans le temps, est présent dans un canal (1) à gaz brut contenant de l'aérosol à caractériser, et un canal (4) à gaz de mesure est présent en vue de délivrer du gaz de mesure à au moins une unité de mesure, incluant les étapes opératoires suivantes :

- mise en circulation d'un gaz de dilution dans le canal (4) à gaz de mesure,
- détermination du flux volumique dans le canal (1, 21) à gaz brut, la dilution de l'aérosol à caractériser étant provoquée par un transfert de gaz brut, provenant dudit canal (1, 21) à gaz brut, au canal à gaz de mesure parcouru par le gaz de dilution, ledit transfert étant régulé de façon telle que la quantité de gaz brut, transférée par unité de temps, soit dépendante du flux volumique présent dans ledit canal (1, 21) à gaz brut, et soit d'autant plus grande que ledit flux volumique est élevé dans ledit canal à gaz brut, qu'au moins une partie de l'aérosol chauffé et dilué est pourvue de la vapeur d'une substance volatile à l'état de sursaturation, si bien que ladite substance volatile se condense intégralement sur la surface de particules en suspension, donnant ainsi naissance à des gouttelettes ; par le fait qu'au stade consécutif, lesdites gouttelettes sont guidées à travers un rayon lumineux et engendrent, de la sorte, une impulsion de lumière diffusée qui est détectée en vue du comptage desdites gouttelettes ; et par le fait qu'une intensité de ladite impulsion de lumière diffusée est détectée et évaluée, la part proportionnelle d'impulsions de lumière diffusée, à intensités faibles, étant déterminée à proximité d'un seuil de détection d'impulsions de lumière diffusée, à l'appui de la quantité de toutes les impulsions de lumière diffusée détectées.

2. Procédé selon la revendication 1, **caractérisé par le fait que** la quantité de gaz brut, transférée par unité de temps, est proportionnelle au flux volumique présent dans le canal (1, 21) à gaz brut, abstraction faite d'un éventuel décalage temporel.

3. Dispositif dévolu à la mise en œuvre du procédé conforme à l'une des revendications précédentes, équipé d'une amenée de gaz, d'une évacuation de gaz et d'une unité de mesure et d'un agencement affecté à l'élimination de particules volatiles en suspension, comprenant des moyens de chauffage conçus pour chauffer l'aérosol jusqu'à une température à laquelle des particules volatiles en suspension se vaporisent, et une unité de dilution (13) pour diluer ledit aérosol à l'aide d'un gaz de dilution, sachant que l'unité de mesure est implantée en aval desdits moyens de chauffage et de ladite unité de dilution, et est réalisée en vue de mesurer des particules solides en suspension qui sont présentes dans ledit aérosol chauffé et dilué au préalable, l'unité de dilution étant implantée en amont des moyens de chauffage, et les moyens de chauffage étant réalisés de manière à chauffer l'aérosol, en service normal, jusqu'à une température mesurant au moins 180 °C et comprise, de préférence, entre 200 °C et 400 °C, **caractérisé par** un canal à gaz brut, comportant une admission d'aérosol, et un canal à gaz de mesure présentant une admission de gaz de dilution, ainsi que des moyens de transfert (13) qui forment l'unité de dilution et sont affectés au transfert dosé d'aérosol audit canal à gaz de mesure, à partir dudit canal à gaz brut, et une unité de mesure conçue pour mesurer des particules en suspension dans l'aérosol dilué présent dans ledit canal à gaz de mesure, ainsi que des moyens conçus pour définir l'écoulement d'aérosol dans ledit canal à gaz brut, et un régulateur (12) conçu pour réguler le transfert de gaz brut audit canal à gaz de mesure, la réalisation dudit régulateur, et sa liaison opérante avec les moyens de transfert, étant telles que lesdits moyens de transfert transfèrent une quantité de gaz brut d'autant plus grande que le flux volumique de gaz brut est élevé dans ledit canal à gaz brut, et un saturateur (41) dans lequel l'aérosol peut être pourvu d'une substance volatile, et un condenseur (43) dans lequel prédominent des conditions par lesquelles ladite substance volatile peut être amenée à un état de sursaturation, un volume de mesure dans lequel des particules en suspension, provenant dudit condenseur, peuvent être guidées à travers un rayon lumineux, et des moyens de détection, conçus pour détecter des impulsions de lumière diffusée qui sont provoquées par la diffusion de lumière dudit rayon lumineux sur des particules en suspension, ainsi que des moyens d'évaluation, réalisés en vue d'évaluer des intensités d'impulsions de lumière diffusée.

Fig. 1a

Fig. 1b

Fig. 2

Fig.3

Fig. 4

Fig. 5a

Fig. 5b

**EP 1 467 194 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0184116 A

**In der Beschreibung aufgeführte Nicht-Patentliteratur**

- **CH. HUEGLIN ; L. SCHERRER ; H. BURTSCHER.** *J. Aersol Sci.,* 1997, vol. 28, 1049